# EUROPÄISCHE PATENTSCHRIFT

(11) **EP 1 785 291 B1**
(45) Veröffentlichungstag und Bekanntmachung des Hinweises auf die Patenterteilung: **17.06.2009**
(21) Anmeldenummer: 06023134.7
(22) Anmeldetag: 07.11.2006
(51) Int. Cl.: B60G 17/027, B60G 15/06

(54) **Federbein für einen Schwingungsdämpfer eines Kraftfahrzeugs**
Shock absorber suspension strut for a vehicle
Jambe de suspension pour amortisseur d'un véhicule

(30) Priorität: 14.11.2005 DE 102005054205
(43) Veröffentlichungstag der Anmeldung: 16.05.2007
(73) Patentinhaber: WOCO AVS GmbH, 63628 Bad Soden-Salmünster (DE)
(72) Erfinder: Klüh, Alfred, 36381 Schlüchtern (DE); Schmidt, Ferenc, 2013 Pomaz (HU)
(74) Vertreter: Schmid, Nils T.F.

(56) Entgegenhaltungen:
- EP-A1- 0 718 130
- DE-A1- 2 545 082
- FR-A1- 2 828 135
- JP-A- 58 085 704
- JP-A- 2001 121 936
- US-A- 4 345 661

## Beschreibung

Die Erfindung betrifft ein Federbein für einen Schwingungsdämpfer eines Kraftfahrzeugs, das an die Karosserie des Kraftfahrzeugs befestigt ist und eine Feder, wie eine Schraubenfeder oder Stahlspiralfeder, umfasst. Die Feder stützt sich üblicherweise an einem karosseriefesten Bauteil ab, das beispielsweise als Lagerplatte an der Karosserie befestigt sein oder als ein Teil der Karosserie ausgebildet sein kann.

Im Fahrbetrieb des Kraftfahrzeugs werden Rollgeräusche von dem Reifen über die Radnabe in einen starr mit der Radnabe verbundenen Achsschenkel übertragen. An dem Achsschenkel schließt das Gehäuse des beispielsweise als Kolbenzylinderstruktur ausgebildeten Schwingungsdämpfers an, in dem ein Arbeitskolben mit einer Kolbenstange zum Dissipieren von Bewegungsenergie gebremst wird. Das Federbein umfasst an dem Gehäuse des Schwingungsdämpfers einen Abstützflansch, an dem sich die Feder schwingungsdämpferseitig abstützt.

Zur akustischen Entkopplung ist es bekannt, zwischen dem karosserienahen Ende der Schraubenfeder und dem karosseriefesten Bauteil eine mehr oder weniger dünne Gummischicht vorzusehen.

Es stellte sich bei dem bekannten Federbein als Nachteil heraus, daß bei Schwingungsbelastungen im Eigenschwingungsbereich der Stahlfeder Körperschall weitgehend ungehindert über die Feder in die Karosserie übertragen wird, was zu einem störenden Geräusch im Fahrgastraum führt. Eine vermeintliche Lösung der besseren akustischen Entkoppelung durch Verdickung der Gummischicht zwischen der Schraubenfeder und dem karosseriefesten Bauteil hat zwar tatsächlich eine gewisse Reduzierung der Schallübertragung zur Folge. Allerdings geht mit der dickeren Gummischicht auch eine Reduzierung der Festigkeit des Federbeins in axialer Richtung einher, was hinsichtlich der Fahrdynamik des Fahrzeugs unerwünscht ist.

Aus US 4,345,661 ist ein Stabilisatorsystem für ein Kraftfahrzeug bekannt, das Hydraulikdruck in eine Aufhängeeinheit überführt, um das Kraftfahrzeugchassis bei Kurvenfahrten zu stabilisieren.

JP 58085704 offenbart eine Kraftfahrzeugaufhängung mit einem Zweizylinderdämpfer. Ein Luftkissen ist an einem oberen Abschnitt eines Führungszylinders angeordnet.

Es ist Aufgabe der Erfindung, die Nachteile des Standes der Technik zu überwinden, insbesondere ein Federbein für einen Schwingungsdämpfer eines Kraftfahrzeugs bereitzustellen, mit dem eine deutliche Reduzierung von Körperschall in die Karosserie, insbesondere bei Schwingungsbelastungen im Eigenfrequenzbereich der Feder erreicht wird, insbesondere ohne die Fahrdynamikeigenschaften des Kraftfahrzeugs zu beeinträchtigen.

Diese Aufgabe wird durch die Merkmale von Patentanspruch 1 gelöst.

Danach ist im Kopplungsbereich zwischen der Feder und dem karosseriefesten Bauteil eine gasgestützte Zwischenlage angeordnet. Es zeigte sich, daß mit einer Gasunterstützung zwischen der Schraubenfeder und dem karosseriefesten Bauteil Körperschall bei Belastungsschwingung im Eigenfrequenzbereich der Schraubenfeder faktisch eine Isolierung des Schwingungsdämpfers von der Karosserie geschaffen wird. Die gasunterstützte Zwischenlage hat aufgrund des Dämpfungsverhaltens von eingeschlossenem Gas die Wirkung, sich bei einer Eigenfrequenzbelastung nicht zu verfestigen, wie es bei Gummi der Fall ist, so daß Körperschall in dem kompressiblen Gasvolumen kompensiert wird. Mit der erfindungsgemäßen Maßnahme der Anordnung einer Gasschicht zwischen Schraubenfeder und karosseriefestem Bauteil wurde eine Körperschallisolierung des Federbeins erreicht, ohne eine Bauraumvergrößerung des Federbeins hinnehmen zu müssen. Somit ist beim Einsatz des erfindungsgemäßen Federbeins keine Profiländerung an der Karosseriestruktur im Bereich der Ankoppelung notwendig. Ebenso sind zusätzliche Simulationsberechnungen von Seiten des Fahrzeugherstellers nicht erforderlich.

Die Federrate der zusätzlichen gasgestützten Zwischenlage zwischen Schraubenfeder und karosseriefestem Bauteil kann beispielsweise durch Einstellung eines in der gasgestützten Zwischenlage definierten Gasvolumens je nach dessen Größe reduziert werden. Je größer das Gasvolumen desto besser wird die Isolation. Mit größerem Gasvolumen nimmt zudem die Steifigkeit des Federbeins in Axialrichtung kaum ab.

Bei einer Weiterbildung der Erfindung ist die gasgestützte Zwischenlage durch eine Luftfeder gebildet. Dabei kann die gasgestützte Zwischenlage durch einen dichten, gasgefüllten Raum definiert sein, der zumindest teilweise von einer Membran, insbesondere einer Rollmembran, begrenzt ist. Die Membran kann einerseits an dem karosseriefesten Bauteil insbesondere mittels eines Klemmrings und andererseits an einem Federteller fluiddicht angebracht sein, gegen den sich die Feder axial abstützt.

Bei einer bevorzugten Ausführung der Erfindung ist die gasgestützte Zwischenlage dazu ausgelegt, die Feder in deren Axialrichtung zu führen. Um die Schraubenfeder auch in radialer Richtung sicher zu halten, kann eine an dem karosseriefesten Bauteil fest angeordnete Schubfeder vorgesehen sein. Die mit der Feder gekoppelte Schubfeder führt die Feder in Radialrichtung. Hierzu kann die Schubfeder in Radialrichtung steifer als in Axialrichtung der Feder ausgeführt sein.

Bei einer weiteren bevorzugten Ausführung der Erfindung weist zur Niveauregulierung des Federbeins die gasgestützte Zwischenlage einen Anschluß an eine Gasdruckquelle und/oder eine Gasdrucksenke auf. Der Abstand zwischen der Feder und dem karosseriefesten Bauteil kann bei einer Normallast vergrößert oder verkleinert werden. Dabei soll eine Vorab-Einstellbarkeit des Abstands insbesondere abhängig von der Beladung des Kraftfahrzeugs genutzt werden.

Es ist allerdings in einer weiteren Ausführung auch vorstellbar, die Niveauregulierung des Federbeins fahrdynamisch aktiv zu gestalten, indem eine Sensoreinrichtung den Druck innerhalb der gasgestützten Zwischenlage mißt und anhand des Drucksignals und der Lastdaten eine entsprechende Gaszuführung in die gasgestützte Zwischenlage oder Abführung je nach Belastungsgrad und Fahrdynamik während des Fahrbetriebs regelt und steuert.

Bei einer bevorzugten Ausführung der Erfindung ist innerhalb des Gasvolumens der gasgestützten Zwischenlage ein Axialanschlag vorgesehen, der eine axiale Verlagerung der Feder auf das karosseriefeste Bauteil hin im Falle einer überkritischen Stoßbelastung elastisch begrenzt.

In einer bevorzugten Ausführung der Erfindung ist der Schwingungsdämpfer über die Feder, insbesondere die Schraubenfeder, mit dem karosseriefesten Bauteil beweglich gekoppelt. Eine Kolbenstange des Schwingungsdämpfers erstreckt sich in einer Axialrichtung der Feder, insbesondere parallel zur letzteren. Insbesondere ragt das freie Ende der Kolbenstange durch eine in dem karosseriefesten Bauteil eingearbeitete Öffnung hindurch.

Weitere Vorteile, Eigenschaften und Merkmale der Erfindung werden durch die folgende Beschreibung einer bevorzugten Ausführung anhand der beiliegenden Zeichnung deutlich, in der zeigt:

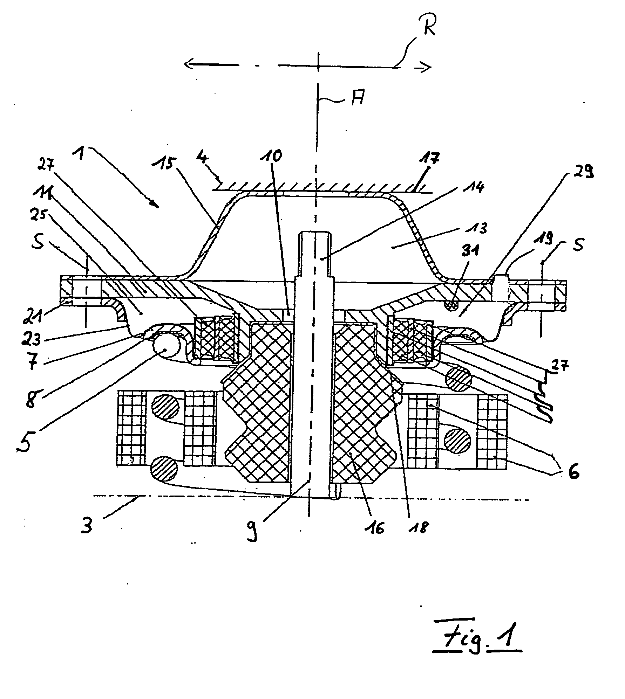

Fig. 1 eine Schnittansicht eines Abschnitts eines erfindungsgemäßen Federbeins.

In Fig. 1 ist ein erfindungsgemäßer Aufbau 1 zur Ankoppelung eines Federbeins 3, von dem nur ein karosserienaher Teil dargestellt ist, an eine Kraftfahrzeugkarosserie 4 gezeigt.

Das erfindungsgemäße Federbein 3 umfaßt eine an einem Gehäuse 6 eines nicht näher dargestellten Schwingungsdämpfers abstützende Stahlspiralfeder 5. Karosserieseitig (4) stützt sich die Stahlspiralfeder 5 an einem Federteller 7 ab. Zwischen dem Federteller 7 und der Stahlspiralfeder 5 ist eine dünne Gummilage 8 angeordnet, die eine Schall isolierende Wirkung aufweist und die Stahlspiralfeder daran hindert aus dem Federteller 7 zu rutschen.

Eine Kolbenstange 9 des Schwingungsdämpfers erstreckt sich durch eine in einem karosseriefesten Bauteil 11 eingearbeitete Öffnung 10 hindurch und ragt in einen Hohlraum 13 für nicht dargestellte Bauteile eines Dämpferlagers. Das Dämpferlager ist an einen Gewindefortsatz 14 der Kolbenstange 9 anschließbar. Die Kolbenstange 9 erstreckt sich durch eine Gummimuffe 16 hindurch, zwischen der (16) und dem karosseriefesten Bauteil 11 eine Blechaufnahme 18 angeordnet ist. Die Stahlspiralfeder 5 ist innerhalb des Gehäuses 6 des Schwingungsdämpfers aufgenommen.

Das karosseriefeste Bauteil 11 ist mit an einem topfförmigen Karosserieblechteil 15 verschraubt (bei S), das an einem Hauptträger 17 der Karosserie 4 befestigt ist. Desweiteren umfaßt das karosseriefeste Bauteil 11 einen pneumatischen Anschluß 19 zur Niveauregulierung des Federbeins 3, der in eine gasgestützte Zwischenlage (bei 25 und 29) mündet.

Stahlspiralseitig ist an dem karosseriefesten Bauteil 11 ein Ringteil 21 durch die Verschraubung S befestigt. Zwischen dem Ringteil 21 und dem karosseriefesten Bauteil 11 ist eine Rollmembran 23 eingeklemmt, die sich hin zum Federteller 7 erstreckt. Die Rollmembran 23 ist an dem Federteller 7 derart angeklebt, daß ein Luftraum 25 luftdicht unterhalb des karosseriefesten Bauteils 11, zumindest von dem karosseriefesten Bauteil 11 und dem Rollmembran 23 begrenzt, gebildet ist, um eine Luftfederwirkung an der Abstützung der Stahlspiralfeder 5 an dem karosseriefesten Bauteil 11 bereitzustellen. Innerhalb des Luftraums 25 der Luftfeder 29 ist ein Gummianschlag 31 zur Begrenzung der Bewegung der Kolbenstange 9 relativ zum karosseriefesten Bauteil 11 an der Luftfederseite des karosseriefesten Bauteils 11 vorgesehen.

Der Federteller 7 stützt sich radial innen an einer Schubfeder 27 ab, die aus drei konzentrischen Metallringen und zwei Gummizwischenschichten gebildet ist. Die Schubfeder 27 hat die Aufgabe, den Federteller 7 in Radialrichtung R zu führen.

In Axialrichtung A auf den Federteller 7 wirkende Kräfte der Stahlspiralfeder 5 werden von der durch das Luftvolumen 25 gebildeten Luftfeder 29 absorbiert, wodurch zusätzlich eine Führung der der Kolbenstange 9 in Axialrichtung A erreicht ist.

Die in der vorstehenden Beschreibung, der Figur und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Aufbau
- 3: Federbein
- 4: Kraftfahrzeugkarosserie
- 5: Stahlspiralfeder
- 6: Gehäuse
- 7: Federteller
- 8: Gummilager
- 9: Kolbenstange
- 10: Öffnung
- 11: karosseriefestes Bauteil
- 13: Hohlraum
- 14: Gewindefortsatz
- 15: topfartiges Karosserieblechteil
- 16: Gummimuffe
- 17: Hauptträger
- 18: Blechaufnahme
- 19: pneumatischer Anschluß
- 21: Ringteil
- 23: Rollmembran
- 25: luftdichter Hohlraum
- 27: Schubfeder
- 29: Luftfeder
- 31: Gummianschlag
- (S): Verschraubung
- R: Radialrichtung
- A: Axialrichtung

## Patentansprüche

1. Federbein für einen Schwingungsdämpfer eines Kraftfahrzeugs, das an die Karosserie (4) des Kraftfahrzeugs befestigbar ist und eine Feder, wie eine Stahlspiralfeder (5), die sich an einem karosseriefesten Bauteil (11) abstützt; einen Federteller (7), der sich gegen die Feder axial abstützt; und eine Schubfeder (27), die den Federteller (7) in Radialrichtung (R) führt, umfaßt **dadurch gekennzeichnet, daß**
im Kopplungsbereich zwischen der Feder und dem karosseriefesten Bauteil (11) eine gasgestützte Zwischenlage angeordnet ist, die durch einen dichten gasgefüllten Raum (25) definiert ist, der zumindest teilweise von einer Membran begrenzt ist;
der Federteller (7) radial innen an der Schubfeder (27) abgestützt ist.

2. Federbein nach Anspruch 1, **dadurch gekennzeichnet, daß** die gasgestützte Zwischenlage eine Luftfeder (29) bildet.

3. Federbein nach Anspruch 1 oder 2, **dadurch gekennzeichnet, daß** die Membran eine eine Rollmembran (23) ist.

4. Federbein nach Anspruch 3, **dadurch gekennzeichnet, daß** die Membran einerseits an dem karosseriefesten Bauteil (11) und andererseits an dem Federteller (7) fluiddicht angebracht ist, gegen den sich die Feder axial abstützt.

5. Federbein nach einem der Ansprüche 1 bis 4, **dadurch gekennzeichnet, daß** die Feder durch die gasgestützte Zwischenlage in Axialrichtung (A) der Feder gerührt ist.

6. Federbein nach einem der Ansprüche 1 bis 5, **dadurch gekennzeichnet, daß** die Feder mit der Schubfeder (27) gekoppelt ist, welche die Feder in Radialrichtung (R) führt.

7. Federbein nach Anspruch 6, **dadurch gekennzeichnet, daß** die Schubfeder (27) in Radialrichtung steifer als in Axialrichtung (A) ausgeführt ist.

8. Federbein nach einem der Ansprüche 1 bis 7, **dadurch gekennzeichnet, daß** zur Niveauregulierung des Federbeins die gasgestützte Zwischenlage einen Anschluß (19) an eine Gasdruckquelle und/oder an eine Gasdrucksenke aufweist, über den der Abstand zwischen der Feder und dem karosseriefesten Bauteil (11) bei einer Normallast vergrößert und/oder verkleinert werden kann.

9. Federbein nach einem der Ansprüche 1 bis 8, **dadurch gekennzeichnet, daß** die gasgestützte Zwischenlage einen Axialanschlag aufweist, der eine axiale Verlagerung der Feder auf das karosseriefeste Bauteil (11) hin begrenzt.

10. Federbein nach einem der Ansprüche 1 bis 9, **dadurch gekennzeichnet, daß** der Schwingungsdämpfer über die Feder mit dem karosseriefesten Bauteil (11) beweglich gekoppelt ist und eine Kolbenstange (9) des Schwingungsdämpfer sich in Axialrichtung (A) der Feder zu letzterer parallel erstreckt, wobei insbesondere das freie Ende der Kolbenstange (9) durch eine in dem karosseriefesten Bauteil (11) eingearbeitete Öffnung (10) hindurch ragt.

## Claims

1. Suspension strut for a shock absorber of a motor vehicle, which is mountable at the body (4) of the motor vehicle, and a spring, like a coil spring (5), which presses against an element (11) steady with the body; a spring plate (7), which is axially pressed against the spring; and an elastomeric spring (27), which leads the spring plate (7) in radial direction (R), **characterised in that**
in a coupling area between the spring and element (11) steady with the body, there is a gas supported interim layer, which is defined by a dense gas filled chamber (25), which is at least partially confined by a membrane;
the spring plate (7) is radially supported inside the elastomeric spring (27).

2. Suspension strut according to claim 1, **characterised in that** the gas supported interim layer forms an air spring (29).

3. Suspension strut according to claim 1 or 2, **characterised in that** the membrane is a roll diaphragm.

4. Suspension strut as in claim 3, **characterised in that** the membrane is fixed in a fluid tight manner at the element (11) steady with the body, as well as at the spring plate (7), against which the spring is pressing axially.

5. Suspension strut as in one of the claims 1 to 4, **characterised in that** the spring is guided in axial direction (A) of the spring by the gas supported interim layer.

6. Suspension strut as in one of the claims 1 to 5, **characterised in that** the spring is coupled with the elastomeric spring (27), which leads the spring in radial direction (R).

7. Suspension strut as in claim 6, **characterised in that** the elastomeric spring (27) is stiffer in radial direction than in axial direction (A).

8. Suspension strut as in one of the claims 1 to 7, **characterised in that,** for regulating the level of the suspension strut, the gas supported interim layer has a connection (19) to a gas pressure source and/or a gas pressure sink through which the distance between the spring and the element (11) steady with the body can be increased or decreased for a normal load.

9. Suspension strut as in one of the claims 1 to 8, **characterised in that** the gas supported interim layer has an axial abutment, which limits an axial displacement of the spring towards the element (11) steady with the body.

10. Suspension strut as in one of the claims 1 to 9, **characterised in that** the shock absorber is movably coupled to the element (11) steady with the body via the spring, and a piston rod (9) of the shock absorber extends in an axial direction (A) of the spring parallel to the latter, whereby especially the free end of the piston rod (9) protrudes through an opening (10) in the element (11) steady with the body.

## Revendications

1. Jambe amortisseuse pour amortisseur de vibrations d'un véhicule automobile, qui peut être fixée sur la carrosserie (4) du véhicule automobile et comprend un ressort, comme un ressort spirale en acier (5), qui s'appuie sur un composant (11) fixe de la carrosserie ; une coupelle de ressort (7), qui s'appuie axialement contre le ressort ; et un ressort de poussée (27), qui guide la coupelle de ressort (7) dans la direction radiale (R), **caractérisée en ce que**
dans la zone de couplage entre le ressort et le composant fixe de la carrosserie (11) est disposée une couche intermédiaire appuyée sur du gaz, qui est définie par un espace (25) étanche rempli par du gaz, lequel est délimité au moins partiellement par une membrane ;
la coupelle de ressort (7) est appuyée radialement à l'intérieur sur le ressort de poussée (27).

2. Jambe amortisseuse selon la revendication 1, **caractérisée en ce que** la couche intermédiaire appuyée sur du gaz forme un ressort à air (29).

3. Jambe amortisseuse selon la revendication 1 ou 2, **caractérisée en ce que** la membrane est une membrane enroulée (23).

4. Jambe amortisseuse selon la revendication 3, **caractérisée en ce que** la membrane est montée de manière étanche aux fluides d'un côté sur le composant fixe de la carrosserie (11) et de l'autre côté sur la coupelle de ressort (7), contre laquelle le ressort s'appuie axialement.

5. Jambe amortisseuse selon une des revendications 1 à 4, **caractérisée en ce que** le ressort est guidé à travers la couche intermédiaire appuyée sur du gaz dans la direction axiale (A) du ressort.

6. Jambe amortisseuse selon une des revendications 1 à 5, **caractérisée en ce que** le ressort est couplé au ressort de poussée (27), qui guide le ressort dans la direction radiale (R).

7. Jambe amortisseuse selon la revendication 6, **caractérisée en ce que** le ressort de poussée (27) est conçu en étant plus rigide dans la direction radiale que dans la direction axiale (A).

8. Jambe amortisseuse selon une des revendications 1 à 7, **caractérisée en ce que** à des fins de régulation de niveau de la jambe amortisseuse, la couche intermédiaire appuyée sur du gaz présente un raccord (19) à une source de pression de gaz et/ou à une dépression de pression de gaz, par l'intermédiaire desquels l'espacement entre le ressort et le composant fixe de la carrosserie (11) peut être agrandi et/ou diminué en présence d'une charge normale.

9. Jambe amortisseuse selon une des revendications 1 à 8, **caractérisée en ce que** la couche intermédiaire appuyée sur du gaz présente une butée axiale, qui délimite une superposition axiale du ressort sur le composant fixe de la carrosserie (11).

10. Jambe amortisseuse selon une des revendications 1 à 9, **caractérisée en ce que** l'amortisseur de vibrations est couplé de manière mobile par l'intermédiaire du ressort au composant fixe de la carrosserie (11) et une tige de piston (9) de l'amortisseur de vibrations s'étend dans la direction axiale (A) du ressort parallèlement à ce dernier, moyennant quoi notamment l'extrémité libre de la tige de piston (9) dépasse à travers une ouverture (10) ménagée dans le composant fixe de la carrosserie (11).
